# EUROPEAN PATENT APPLICATION

(11) **EP 2 664 408 A1**
(43) Date of publication of application: **20.11.2013**
(21) Application number: 13167791.6
(22) Date of filing: 15.05.2013
(51) Int. Cl.: B23K 26/08, B41J 2/47, G02B 26/10

(54) **Laser writing device**

(30) Priority: 15.05.2012 IT VA20120012
(71) Applicant: Gambuzzi, Silvano, 41036 Medolla (MO) (IT)
(72) Inventor: Gambuzzi, Silvano, 41036 Medolla (MO) (IT)
(74) Representative: Cicogna, Franco

(57) **Abstract**

A laser writing device comprises a mirror driving system for deflecting a laser beam by means of motors of a kinetic energy recovery type, and includes a printing head on which are clamped motor assemblies (4,5) driving the mirrors (15,16). A laser beam source projects a beam toward a mirror (15) reflecting it onto another mirror (16) in turn directing it toward a focal lens (18) projecting it onto the surface (24) to be processed. The system is associated with a computer controlling the movement and allowing to write images on different solid surfaces.

## Description

### BACKGROUND OF THE INVENTION

The present invention relates to a laser writing device.

As is known, a laser beam allows to perform a lot of different operations and applications, such as a writing operation on different surfaces.

Up to now, the laser writing operation has been performed by a so-called scanning writing system, which, however, is very expensive.

Said laser scanning writing system comprises a plurality of mirror assemblies to be moved for properly orienting the laser beam, by using galvanometric electromagnetic coils.

As stated, this system is very expensive and delicate, and its limits are of an essentially economic nature.

### SUMMARY OF THE INVENTION

Accordingly, the aim of the present invention is to provide a laser writing device which has a making cost much lower than that of a conventional laser writing device.

Within the scope of the above mentioned aim, a main object of the invention is to provide such a laser writing device which has at least a same performance as conventional devices.

Another object of the present invention is to provide such a laser writing device which may be used by a large number of operators, as well as a novel laser marking and writing system.

Yet another object of the present invention is to provide such a laser writing device which may be easily associated with an information system, such as a personal computer.

Yet another object of the present invention is to provide such a laser writing device which, owing to its specifically designed constructional features, is very reliable and safe in operation.

According to one aspect of the present invention, the above mentioned aim and objects, as well as yet other objects, which will become more apparent hereinafter, are achieved by a laser writing device, **characterized in that** said device comprises a printing head including two motor assemblies which are asymmetrical clamped with respect to one another.

Said motor assemblies operate a mirror driving system designed to deflect a laser beam.

Said motor assemblies are of a kinetic energy recovery type.

### BRIEF DESCRIPTION OF THE DRAWINGS

Further characteristics and advantages of the present invention will become more apparent hereinafter from the following disclosure of a preferred, though not exclusive, embodiment of the invention, which is illustrated, by way of an indicative but not limitative example, in the accompanying drawings, where:

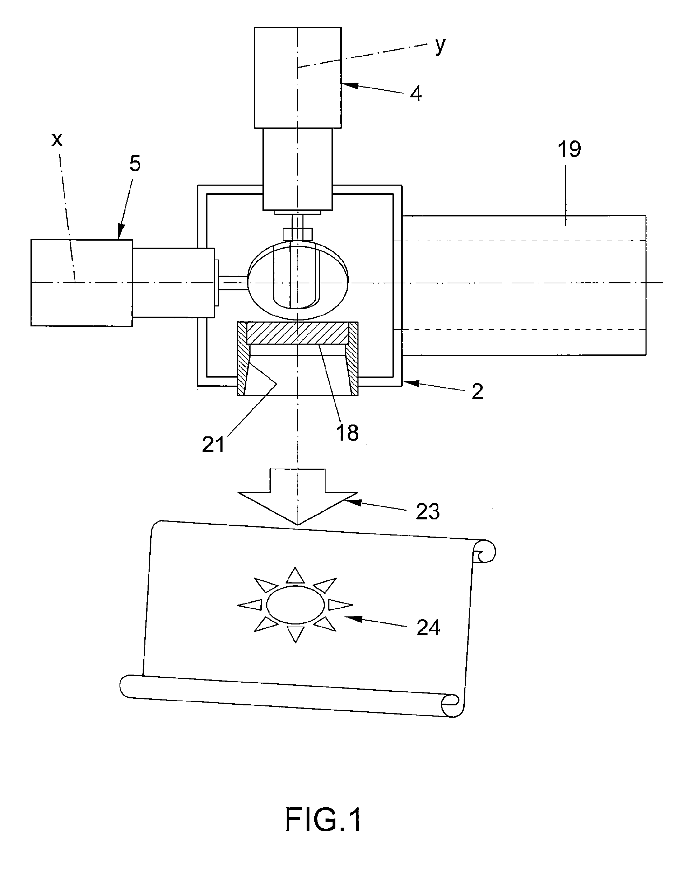

Figure 1 is a schematic front view of the laser writing device, being shown in a use condition thereof;

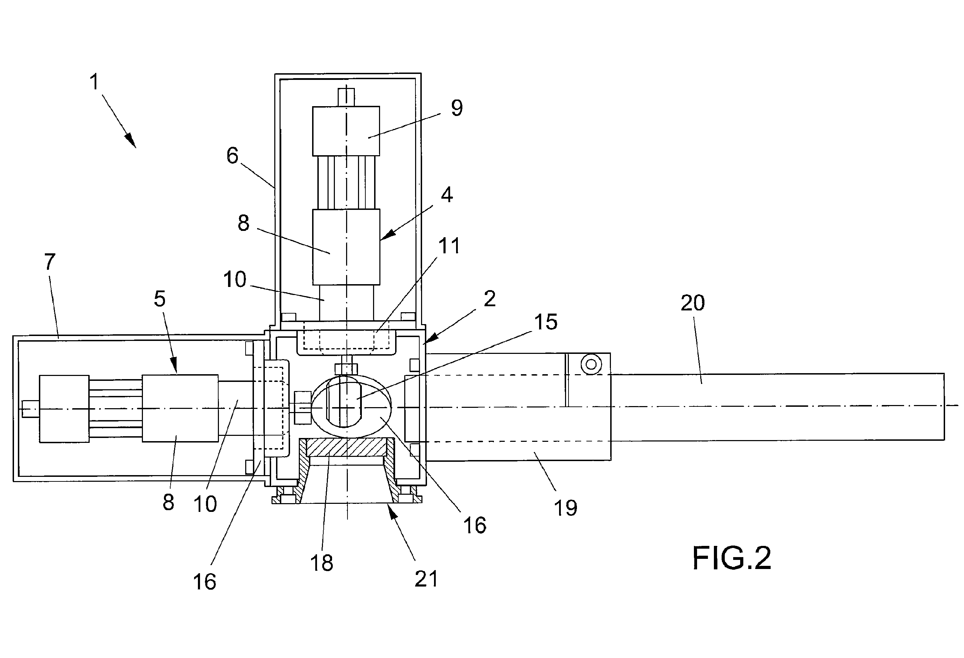

Figure 2 is a front, partially cross-sectioned view, of the device;

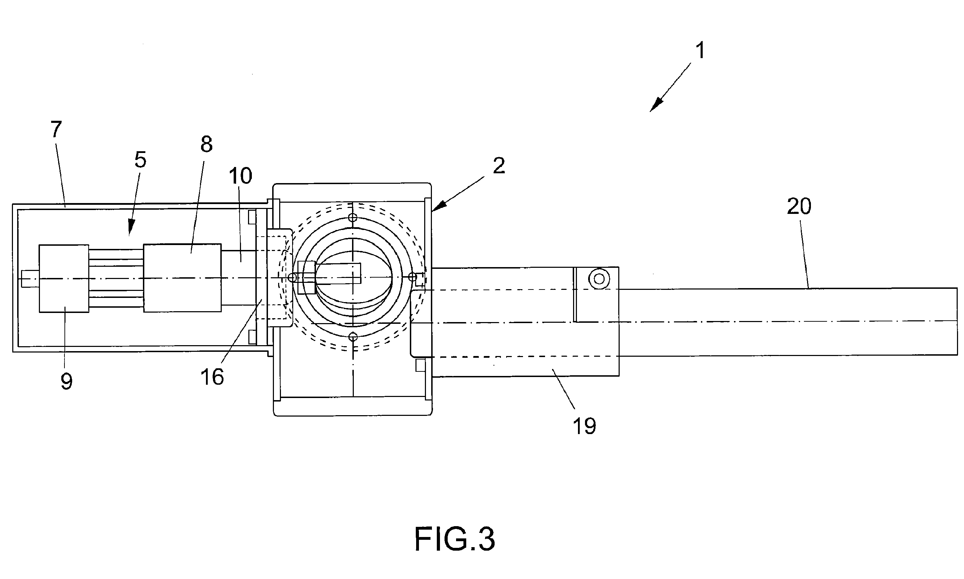

Figure 3 is a top plan view, as partially cross-sectioned, of the device;

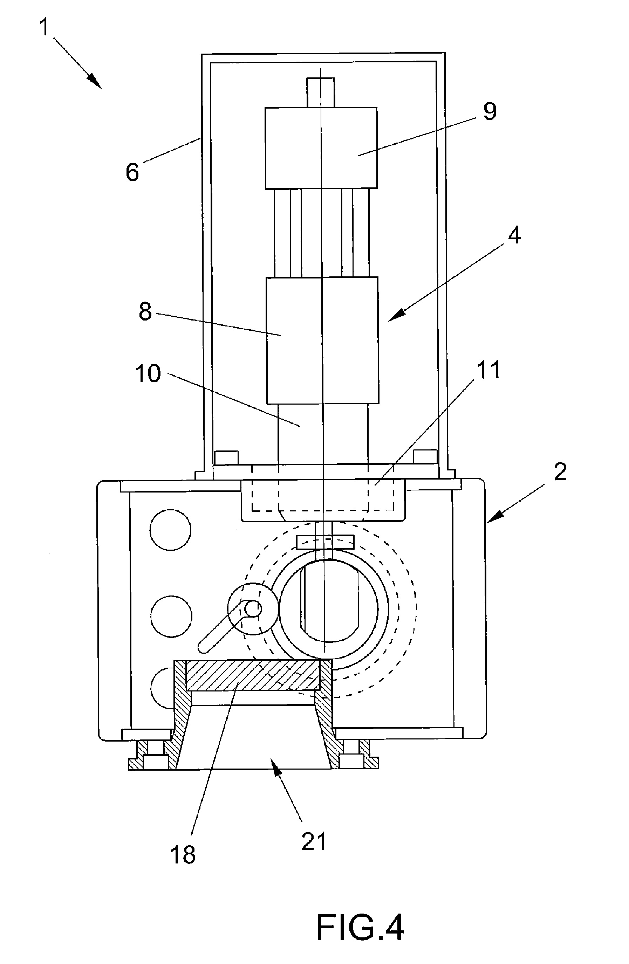

Figure 4 is a partially cross-sectioned side view of the device;

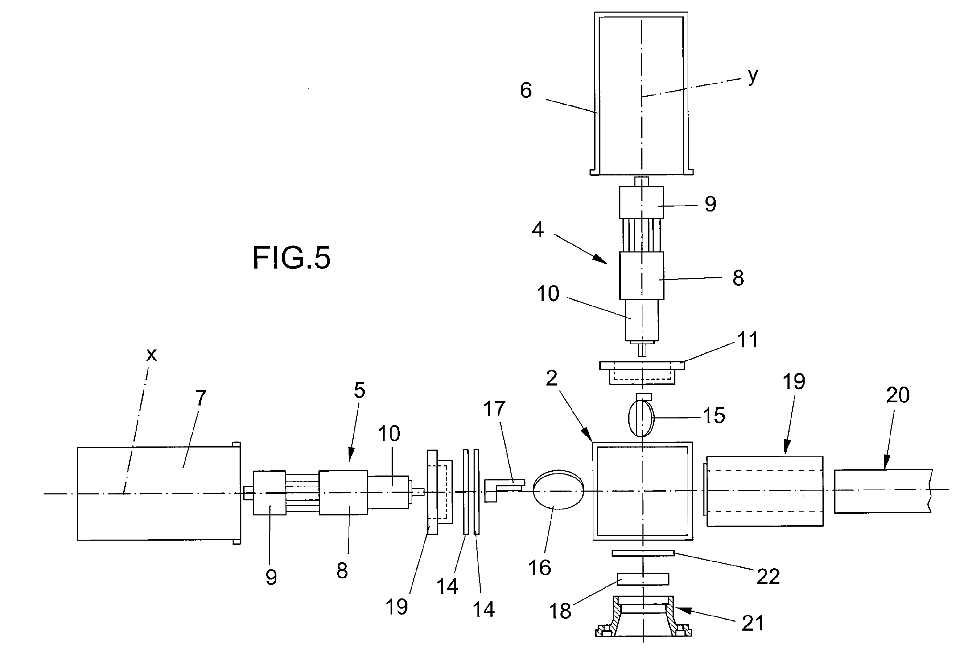

Figure 5 is an exploded view of the device;

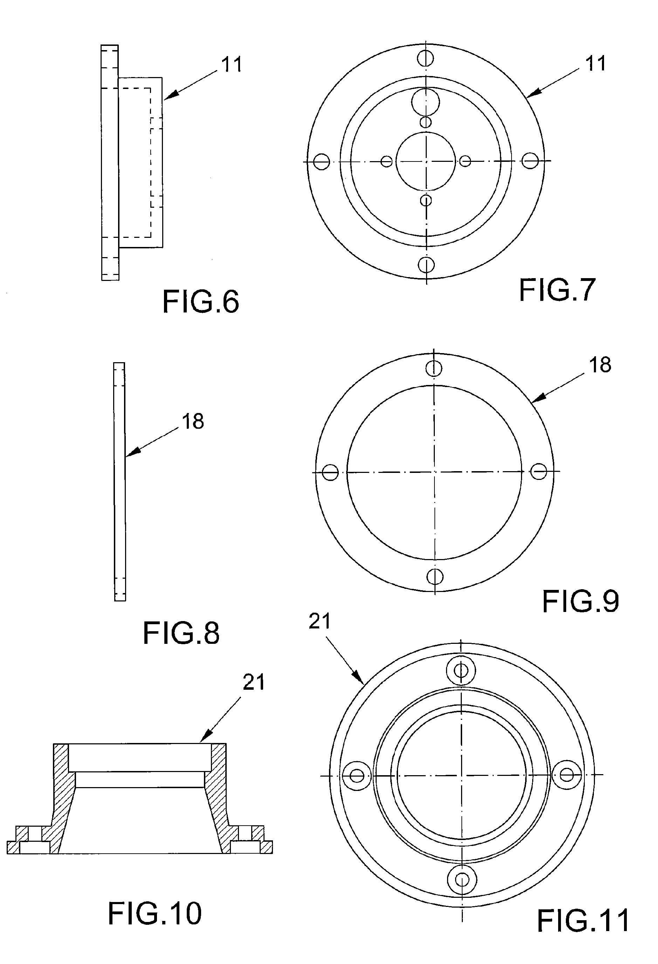

Figure 6 is a cross-sectioned side view of a clamping flange;
Figure 7 is a top plan view of a clamping flange;
Figure 8 is a cross-sectioned side view of the focal lens;
Figure 9 is a top plan view of the focal lens;
Figure 10 is a cross-sectioned side view of a support assembly;
Figure 11 is a top plan view of the support assembly;

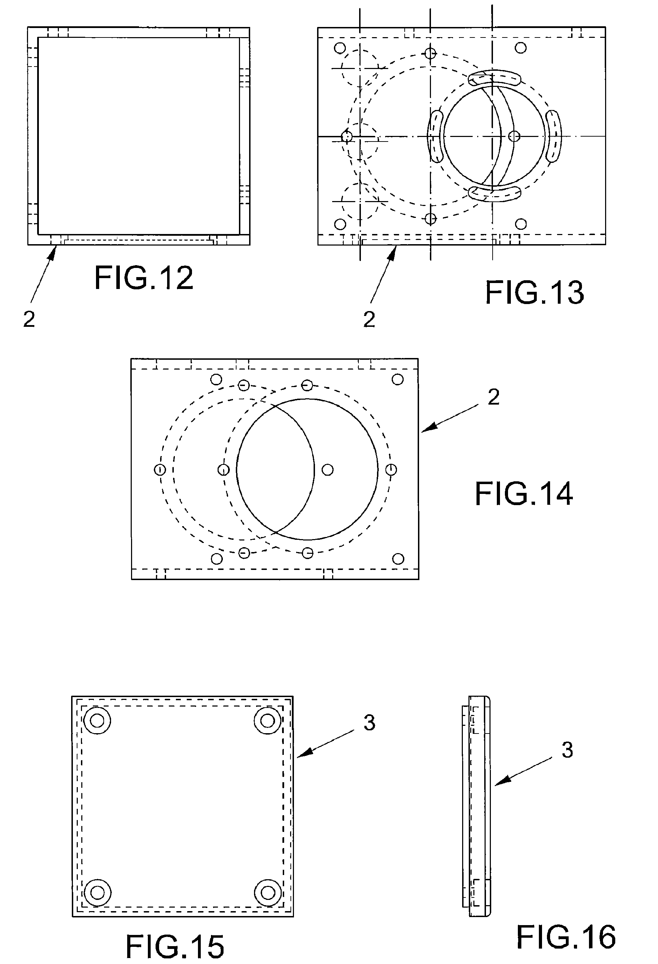

Figure 12 is a cross-sectioned front view of a device central box or casing;
Figure 13 is a further cross-sectioned view of the device box or casing;
Figure 14 is yet another cross-sectioned view of the device box or casing;
Figure 15 is a top plan view of the device cover; and
Figure 16 is a side view of the device cover.

### DESCRIPTION OF THE PREFERRED EMBODIMENTS

With reference to the number references of the above mentioned figures, the laser writing device, according to the present invention, which has been generally indicated by the reference number 1, comprises a printing head including a mirror driving system, for deflecting a laser beam by means of motor assemblies of a kinetic energy recovery type.

More specifically, the printing head comprises a box or casing 2 having a casing cover 3 thereon two motor assemblies, respectively indicated by the reference numbers 4 and 5 and each protected by a respective box or casing 6 and 7, are mounted.

Each said motor assembly 4 and 5 comprises two motors: a master or main motor 8, controlled by an information system (software) and a slave or "secondary" motor 9, for recovering the revolution kinetic energy, and operating as a braking or friction system for the main motor.

The main motor 8 comprises a precision revolution reducing unit 10.

Advantageously, said precision reducing unit 10 has a 1/16 or 1/32 reduction ratio, allowing to achieve a high operation precision.

The motor assemblies 4 and 5 are mounted on the box or casing 2 in an asymmetric manner with respect to one another.

In particular, the motor assembly 4 is vertically mounted, according to an axis Y, by a clamping flange 11.

The motor assembly 5 is in turn horizontally mounted according to an axis X, also by a clamping flange 12, with an addition of spacer elements 14.

A vertical mirror 15 is clamped to the revolution reducing unit 10 of the vertical motor assembly 4.

The vertical mirror 15 deflects the laser beam onto a horizontal mirror 16.

Said horizontal mirror 16 is clamped to the revolution reducing unit 10 of the horizontal motor assembly 5, through a support element 17, for deflecting the laser beam onto a focal lens 18.

On the opposite side, with respect to the horizontal motor assembly 5, of the central box or casing 2, a tube 19 is clamped and, through said tube 19, the laser beam generated by a laser beam source 20 is directed.

On the opposite side, with respect to the vertical motor assembly 4, of the central casing 2, a support 21 is clamped including the focal lens 18 with a tightness gasket 22 arranged therebetween.

The laser writing device according to the present invention operates as follows.

The laser source 20 generates a laser beam which, through the protective tube 19, arrives at the vertical mirror 15, mounted on the reducing unit 10 of the vertical motor assembly 4.

The horizontal mirror 15 directs the laser beam onto the vertical mirror 16, mounted on the reducing unit 10 of the horizontal motor assembly 5.

The horizontal mirror 15 projects the laser beam onto the focal lens 18, which in turn directs a laser beam 23 on a surface 24 to be processed.

The movements of the mirrors coupled to the motor assemblies 4 and 5 are controlled by an information system allowing to orient or direct said mirrors 15 and 16 to in turn direct the laser beam in a target direction, with a target speed or rate and with a very high precision.

The information system manages and controls the laser beam power, to drive the device to write on different surfaces.

The device may be made of different materials, such as a plastic material, or a metal, glass, ceramics, carbon or any other desired materials of any desired nature providing the device with the above disclosed operating features.

It has been found that the invention fully achieves the intended aim and objects.

In fact, the invention has provided a laser writing device comprising a mirror driving system, for deflecting the laser beam, including motor assemblies with a kinetic energy recovery feature, thereby greatly reducing the making cost, by about 70%, with respect to conventional devices.

Moreover, the inventive device provides the same performance as the much more expensive conventional like devices.

In practicing the invention, the used materials, as well as the contingent size and shapes, can be any depending on requirements.

## Claims

1. A laser writing device, **characterized in that** said device comprises a printing head including two motor assemblies asymmetrically clamped with respect to one another, said motor assemblies controlling a mirror driving system adapted to deflect a laser beam, said motor assemblies being of a kinetic energy recovery type.

2. A laser writing device, according to claim 1, **characterized in that** said printing head comprises a casing, including a casing cover, and thereon the two motor assemblies, as protected by respective protecting box members, are mounted.

3. A laser writing device, according to claim 1, **characterized in that** each said motor assembly comprises two motors: a main motor, operatively driven and controlled by an information system, and a secondary motor for recovering a revolution number, or kinetic energy, by operating as a braking or friction system for the main motor.

4. A laser writing device, according to claim 3, **characterized in that** said main motor comprises a precision revolution reducing unit.

5. A laser writing device, according to claim 4, **characterized in that** said revolution reducing unit has a 1/16 or 1/32 reduction ratio.

6. A laser writing device, according to claim 1, **characterized in that** a said motor assembly is vertically mounted, according to an axis Y, by a clamping flange; the other said motor assembly being horizontally mounted, according to an axis X, by a further clamping flange, with an addition of spacer elements; a vertical mirror being clamped to the vertical motor assembly reducing unit.

7. A laser writing device, according to one or more of the preceding claims, **characterized in that** said vertical mirror deflects the laser beam onto a horizontal mirror; said horizontal mirror being clamped to the horizontal motor assembly reducing unit by a support element, and deflecting the laser beam toward a focal lens.

8. A laser writing device, according to claims 2 and 6, **characterized in that**, on a side of said central casing opposite to the horizontal motor assembly, a tube is clamped therethrough the laser beam generated by a laser beam source is directed.

9. A laser writing device, according to one or more of the preceding claims, **characterized in that** on an opposite side, with respect to the vertical motor assembly, of the central casing, is clamped a support element containing the focal lens, with a tightness gasket arranged therebetween.

10. A laser writing device, according to one or more of the preceding claims, **characterized in that** said device comprises an information system to control the movements of the mirrors clamped on the motor assembly reducing units.
